# EUROPEAN PATENT APPLICATION

(11) **EP 1 195 947 A2**
(43) Date of publication of application: **10.04.2002**
(21) Application number: 01308516.2
(22) Date of filing: 04.10.2001
(51) Int. Cl.: H04L 12/26

(54) **Network monitoring control system and method**

(30) Priority: 04.10.2000 JP 2000304296
(71) Applicant: NEC CORPORATION, Tokyo (JP)
(72) Inventor: Takei, Masahiro, Minato-ku, Tokyo (JP)
(74) Representative: Moir, Michael Christopher

(57) **Abstract**

User terminals 2-1, 2-2 notify a monitoring control agent system 1 via respective browsers 21-1, 21-2 of monitoring control business commission data. The monitoring control agent system 1 receives by a customer interface server the commission data notified from the user terminals 2-1, 2-2, analyzes the commission data notified from a customer gateway 16, and stores in a commission content memory 13 the analyzed data as business data for execution in the monitoring control agent system 1. A managing data processor 12 manages business steps such as processing of data and sending of control data to the network system on the basis of the kind of business data stored in the commission content memory 13, and stores the processing result in the monitoring result memory 14. The user terminals 2-1, 2-2 display the data from the monitoring result memory 14 using the browsers 21-1, 21-2.

## Description

### BACKGROUND OF THE INVENTION

The present invention relates to a network monitoring control system and a network monitoring control method and, more particularly, to the control of monitoring networks and systems.

Heretofore, networks and systems have been monitored for the purpose of restoring them, in the event of occurrence of trouble in them, by removing the cause of the trouble or establishing a by-pass circuit on such occasion. Where a network or system is monitored manually to secure the monitoring personnel or prevent monitoring error occurrence, the user builds a monitoring control system for controlling the monitoring of the network or the system.

Such a prior art monitoring control system, however, has the problem that expense and time are required for the user to build it. Another problem posed by this prior art monitoring control system is that education and training of persons as future monitoring system managing personnel require expense and time and, even so, cannot ensure excellence in managing personnel.

A further problem inherent in the prior art monitoring system control system is that, for coping with the possible generation of trouble in the network or the system, each user has to keep preparatory parts for repairing the network or the system when in trouble.

### SUMMARY OF THE INVENTION

An object of the preferred embodiments of the present invention is to provide a network monitoring control system and network monitoring control method, which can solve the above problems and reduce the monitoring control expense without needing highly-advanced monitoring intelligence needed for the monitoring control managing personnel.

An other object of the preferred embodiments of the present invention is to provide a network monitoring control system and network monitoring control method, which permit repairing the network or the system in trouble without need for keeping any preparatory parts.

According to an aspect of the present invention, there is provided a network monitoring control system comprising a managing data processor means, which executes, for a plurality of network user terminals each constituted by a network system and a network monitoring system, the collection, on the basis of commission data from any one of the user terminals, of the status of the corresponding network.

According to another aspect of the present invention, there is provided a network monitoring control system comprising a managing data processor means, which executes, for a plurality of network user terminals each constituted by a network system and a network monitoring system, the collection, on the basis of commission data from any one of the user terminals, of the status of the corresponding network, AND a maintenance service system for executing in commission a maintenance operation with respect to the network on the basis of commission data from the user terminal.

According to other aspect of the present invention, there is provided a network monitoring control method comprising a step for executing for a plurality of network user terminals each constituted by a network system and a network monitoring system, the collection, on the basis of commission data from any one of the user terminals, of the status of the corresponding network.

According to further aspect of the present invention, there is provided a network monitoring control method comprising a step for executing for a plurality of network user terminals each constituted by a network system and a network monitoring system, the collection, on the basis of commission data from any one of the user terminals, of the status of the corresponding network and a step for executing in commission a maintenance operation with respect to the network on the basis of commission data for each user terminal.

Specifically, the network monitoring control system according to the present invention concerns a monitoring control agent system, and is a monitoring control agent system for executing a monitoring control business for a user of a network, which is organized by each network system and each network monitoring system. In this monitoring control agent system, the agent commissioned by the user collects the status of the system or network from the monitoring control system of the system controlled by the user, and periodically makes indication of the performance monitoring data of the system or network, notification of trouble occurrence data and so forth to the user.

More specifically, in the network monitoring control system according to the present invention, a user terminal notifies monitoring control business commission data via a browser to the monitoring control agent system. The data notified from the user terminal to the monitoring control agent system comprises identification data (of the monitoring control subject) and the kind of the commissioned business.

A different user terminal likewise notifies identification data of the monitoring commissioned subject (of the monitoring control subject and the kind of the commissioned subject) as commission data via the browser to the monitoring control agent system.

The monitoring control agent system receives the commissioned data notified from these user terminals are received by the customer interface server, analyzes the commission data notified from the customer gateway, and stores the analyzed data as business data to be executed in the monitoring control agent system in a commission content memory.

A managing data processor of the monitoring control agent system accesses a system managing system via a protocol processing mechanism in the monitoring control subject and a protocol processing mechanism according to data of the monitoring control subject stored in the commission content memory, and obtains data concerning the network system and data concerning a network built in the network system or among the network systems. The managing data processing unit also receives trouble data or like alarm generated in the network system reported at all times from the system managing system.

The managing data processor executes managing business such as processing of data and sending of control data to the network system according to the kind of business stored in the commission content memory on the basis of the obtained data, and stores the processing result in the monitoring result memory.

When the user terminal obtains the state of the monitoring commission subject, it accesses a customer interface server in the monitoring control agent system via the browser. The customer interface server notifies the received access request to the customer gateway.

The customer gateway confirms the rightness of the access, takes out pertinent data from a monitoring result memory, converts the taken-out data to data in a format capable of being read in the browser. The customer interface server transfers the format to the browser, so that the state of the monitoring commission subject can be displayed on the browser.

Usually, each user builds and uses a monitoring control system. However, the construction and use of the monitoring control system requires much know-how, and enormous time and expenses are necessary for the system construction and the education and training of the monitoring personnel.

In contrast, according to the present invention the monitoring control business is commissioned to the monitoring control agent system to reduce the personal burden on the user, and expert monitoring personal is provided in the monitoring control agent system so as to be able to execute high quality monitoring business. The user can also monitor the state of use with the inexpensive browser, and it is thus possible to reduce the expense burden on the building and use of the monitoring control system.

### BRIEF DESCRIPTION OF THE DRAWINGS

Preferred features of the present invention will now be described, by way of example only, with reference to the accompanying drawings, in which:-
Fig. 1 is a block diagram showing a first embodiment of the network monitoring control system according to the present invention;
Fig. 2 is a flowchart showing the steps involved in the users 2-1 and 2-2 and the monitoring control agent system 1 concluding a monitoring control business commission contract;
Fig. 3 is a flow chart of investigating the status of the monitoring control subject systems 3-1 and 3-2 commissioned by the user terminals 2-1 and 2-2 shown in Fig. 1;
Fig. 4 is a block diagram showing the construction of a second embodiment of the network monitoring control system according to the present invention;
Fig. 5 is a flow chart showing a procedure of the urgency notification in the second embodiment of the network monitoring control system according to the present invention;
Fig. 6 is a block diagram showing the construction of a third embodiment of the network monitoring control system according to the present invention;
Fig. 7 is a flow chart showing a procedure of monitoring control operation executed in the user terminals 2-1 and 2-2 in Fig. 6;
Fig. 8 is a block diagram showing the construction of a forth embodiment of the network monitoring control system according to the present invention;
Fig. 9 is a flow chart showing a procedure of the replacement and repair of the network systems 3-1 and 3-2 in the fourth embodiment of the network monitoring control system;
Fig. 10 is a flow chart showing a procedure of changing the configuration of the monitoring control subject systems 3-1 and 3-2 in a fifth embodiment of the network monitoring control system according to the present invention;
Fig. 11 is a block diagram showing the construction of a sixth embodiment of the network monitoring control system according to the present invention; and
Fig. 12 is a flow chart showing a procedure of sending out a periodic report in the sixth embodiment of the network monitoring control system according to the present invention.

### PREFERRED EMBODIMENTS OF THE INVENTION

Preferred embodiments of the present invention will now be described with reference to the drawings.

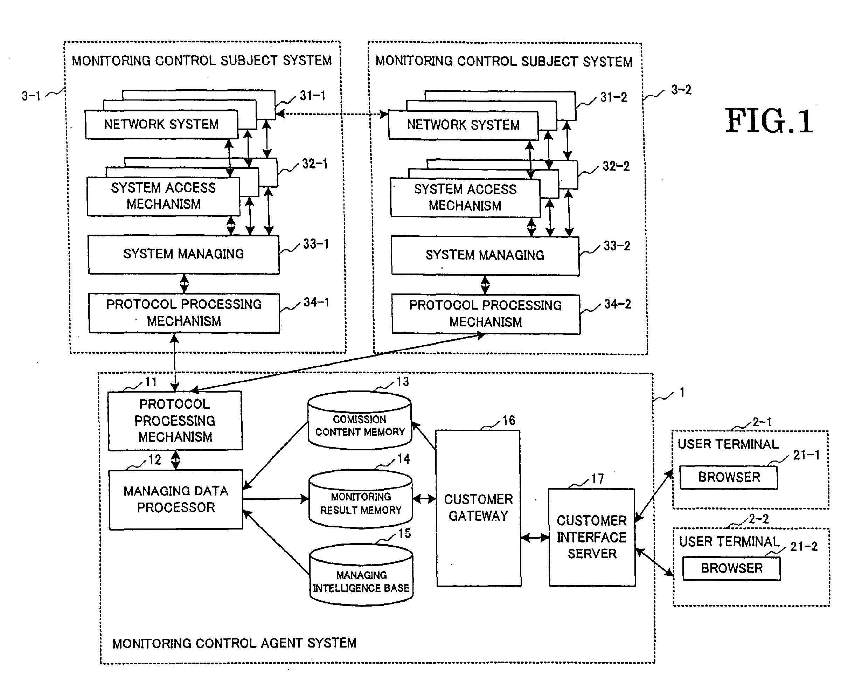

Fig. 1 is a block diagram showing a first embodiment of the network monitoring control system according to the present invention. Referring to Fig. 1, the first embodiment of the network monitoring control system comprises a monitoring control agent system 1, user terminals 2-1 and 2-2 and monitoring control subject systems 3-1 and 3-2.

The monitoring control agent system 1 includes a protocol processing mechanism 11, a managing data processor 12, a commission content memory 13, a monitoring result memory 14, a managing intelligence base 15, a customer gateway and a customer interface server 17.

The user terminals 2-1 and 2-2 includes browsers 21-1 and 21-2, respectively. The monitoring control subject systems 3-1 and 3-2 include network systems 31-1 and 31-2, system access mechanisms 32-1 and 32-2, system managing systems 33-1 and 33-1 and protocol processing mechanisms 34-1 and 34-2.

In the monitoring control agent system 1, the protocol processing mechanisms 11 provide a means for permitting monitoring control of data between the monitoring control agent systems 3-1 and 3-2.

The commission content memory 13 stores business content commissioned by the user. The monitoring result memory 14 stores the result of monitoring the monitoring control subject executed by the managing data processor 12. The managing intelligence base 15 stores a specific procedure of the control of monitoring the monitoring control subject systems 3-1 and 3-2.

The customer gateway 16 executes data conversion necessary for providing data to the user terminals 2-1 and 2-2 and processing requests therefrom. The customer interface server 17 executes communication between the browsers 21-1 and 21-2 of the user terminals 2-1 and 2-2.

The browsers 21-1 and 21-2 of the user terminals 2-1 and 2-2 are software for accessing the monitoring control agent system 1 to read the status of the commissioned monitoring control subject.

The network systems 31-1 and 31-2 of monitoring control subject systems 3-1 and 3-2 form a main signal network. The system access mechanism 32-1 and 32-2 obtain trouble data and performance monitoring data of the network systems 31-1 and 31-2 and data of the monitoring control subject, such as data of main signal network in the network systems 31-1 and 31-2 alone or with the other network systems 31-2 and 31-1 from the network systems 31-1 and 31-2 by the data communication via such means as memory mapped I/O (input/output) and LAN (local area network) in the system.

The system managing systems 33-1 and 33-2 store a list of data of monitoring control concerning the network systems 31-1 and 31-2 of the monitoring control subject systems 3-1 and 3-2 and behavior data in the case of accessing with respect to monitoring control data in its managing data base (not shown). The protocol processing mechanisms 34-1 and 34-2 provide mechanism for the communication of the monitoring control data between the system managing systems 33-1 and 33-2, respectively, and the managing data processor 12.

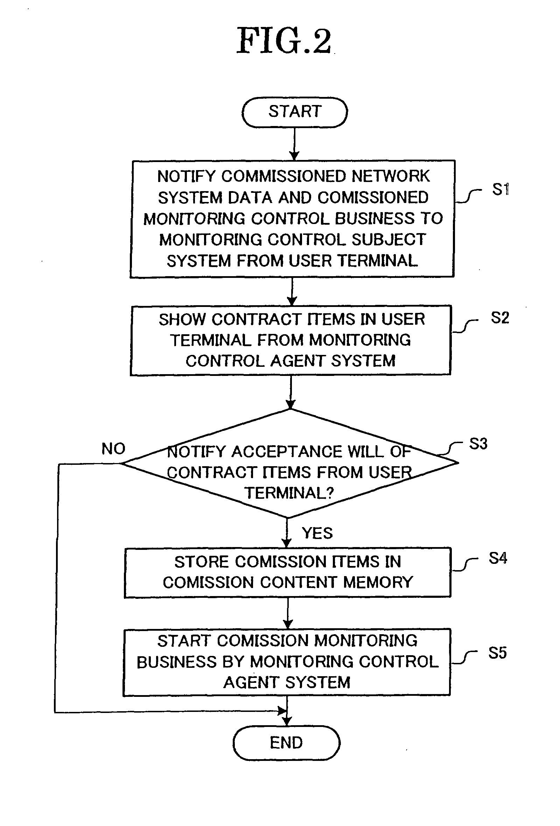

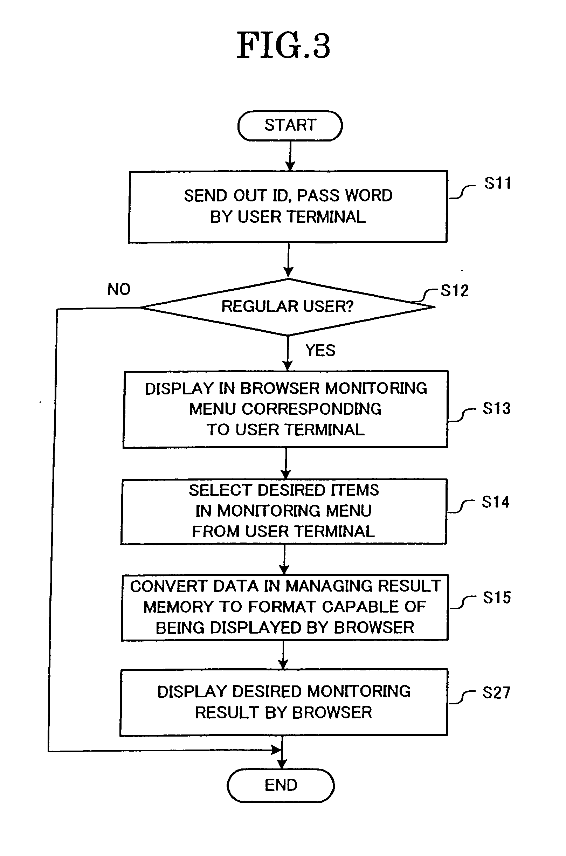

Fig. 2 is a flow chart showing a procedure, in which the users 2-1 and 2-2 and the monitoring control agent system 1 conclude a monitoring control business commission contract. Fig. 3 is a flow chart for investigating the status of the monitoring control subject systems 3-1 and 3-2 commissioned by the user terminals 2-1 and 2-2 shown in Fig. 1. The operation of the network monitoring control system in the first embodiment of the present invention will now be described with reference to Figs. 1 to 3.

When the user terminal 2-1 commissions the monitoring to the monitoring control agent system 1, it notifies data of the kind, the number, etc. of the monitoring control subject systems 3-1 and a monitoring control content, such as the commissioning of trouble monitoring and performance monitoring data monitoring. The user terminal 2-1 executes these notifications by accessing the customer interface server 17 via the browser 21-1. The data notified from the browser 21-1 is transferred from the customer interface server 17 to the customer gateway 16 (step S1 in Fig. 2.)

The customer gateway 16 computes the expense required for the user terminal 2-1 for commissioning the monitoring control as shown in the step S1. The customer gateway 16 converts the concluded contract items including the expense to a format capable of being read, and transfers the converted data via the customer interface server 17 to the browser 21. In the browser 21, the contract items are shown (step S2 in Fig. 2).

When the user terminal 2-1 can accept the contract items, it notifies its acceptance via the browser 21 to the monitoring control agent system 1 (step S3 in Fig. 2). The commission business conclusion procedure in the steps S1 to S3 can be executed by interview or written negotiation between the user terminal 2-1 and the monitoring control agent system 1. The monitoring control agent system 1 stores data of the monitoring control subject system 3-1, which it has accepted the monitoring control for, and data of the monitoring control business to be executed, in the commission content memory 13 (step S4 in Fig. 2), and executes the monitoring control (step S5 in Fig. 2).

The procedure of executing the process of monitoring the monitoring control subject system 3-1 as commissioned by the user terminal 2-1 by the monitoring control agent system 1 will now be described with reference to Fig. 1.

The managing data processor 12 retrieves the commission content memory 13 and executes the monitoring control of the monitoring control subject system 3-1. The managing data processor 12 obtains the name of and the attribute to the monitoring control subject managed object instance as specific monitoring control item.

The managing data processor 12 obtains the pertinent attribute data of the pertinent managing object instance by accessing the system managing system 33-1. The communication between the managing data processor 12 and the system managing system 33-1 is executed via the protocol processing mechanism 11 and 34-1 by using CMIP (common management information protocol) or SNMP (simple network management protocol) as network managing protocol.

The managing data processor 12 forms prevailing status data and statistical data of the network and the system on the basis of data of the network system 31-1 of the monitoring control subject system obtained from the system managing system 33-1, and stores the data thus formed in the monitoring result memory 14.

The procedure of investigating the status of the monitoring control subject system 3-1 commissioned by the user terminal 2-1, will now be described with reference to Figs. 1 and 3.

The user terminal 2-1 accesses the customer interface server 17 of the monitoring control agent system 1 via the browser 21-1. At this time, the user terminal 2-1 sends out user ID (identification data) guaranteeing the user to be a regular user and a corresponding pass word to the customer interface server 17 (step S11 in Fig. 3).

The customer interface server 17 sends out data of the user ID and the pass word sent out from the user terminal 2-1 to the customer gateway 16, and the customer gateway 16 certifies the accessing (step S12 in Fig. 3).

When the certification has succeeded, the customer gateway 16 sends out monitoring menu data directed to the user user terminals 2-1 via the customer interface server 17 to the browser 21-1 (steps S13 in Fig. 13). Unless the certification is successful, the user terminal 2-1 cannot access the monitoring control agent system 1.

The monitoring menu data comprises items necessary for grasping the state, such as the prevailing status of the monitoring control subject, which each user has commissioned the monitoring control of, and statistical data. The user terminal 2-1 selects items of investigation on the browser 21-1 (step S14 in Fig. 3).

The selected items are notified from the browser 21-1 to the customer interface server 17. The customer interface server 17 notifies these items to the customer gateway 16. The customer gateway 16 obtains data corresponding to the selected items from the monitoring result memory 14.

The data stored in the monitoring result memory 14 is converted, in advance or when requested from the user terminal 21, in the customer gateway 16 to HTML (Hyper Text Mark-up Language) and PDF (Portable Document Format) capable of being shown by the browser 21-1 (step S15 in Fig. 3), and sends out the converted data via the customer interface server 17 to the browser 21-1, whereby the data of the items selected by the user is displayed on the browser 21-1 (step S16 in Fig. 3).

The above operation in this embodiment is executed in the same way in the case of the monitoring control agent system 1 and the user terminal 2-2 commissioning the business of the monitoring control of the monitoring control subject system 3-2 to the monitoring control agent system 1.

As shown above, while the monitoring control agent system 1 collectively develops a system necessary for the monitoring control commissioned by a plurality of users and collectively prepares necessary meterials, the users each prepare the relatively inexpensive browsers 21-1 and 21-2 to be able to obtain monitoring control results. It is thus possible to reduce the monitoring control expense of the users who would otherwise do the monitoring control themselves.

Further, since the monitoring control agent system 1 executes the business of the monitoring control of the monitoring control subject systems 3-1 and 3-2 and the business of reporting the result of the monitoring control, the users can do monitoring operations with relatively simple intelligence such as intelligence of operating the browsers 21-1 and 21-2, that is, the users doing the monitoring control do not require high level monitoring intelligence.

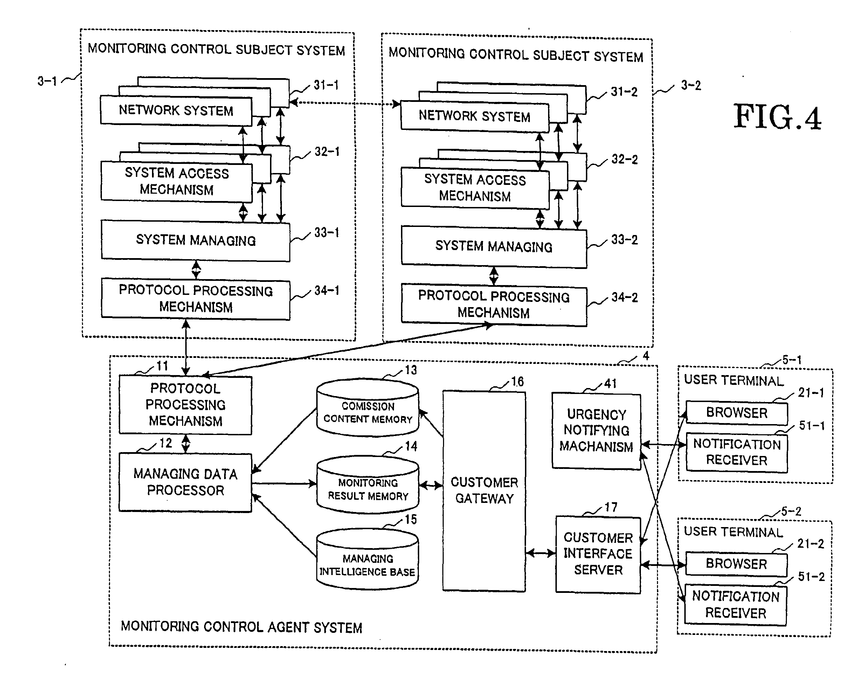

Fig. 4 is a block diagram showing the construction of a second embodiment of the network monitoring control system according to the present invention. Referring to Fig. 4, the second embodiment of the network monitoring control system is the same in construction as the first embodiment of the present invention as shown in Fig. 1 except that the monitoring control agent system 4 additionally includes an urgency notifying mechanism 41 and that the user terminals 5-1 and 5-2 additionally include notification receivers 51-1 and 51-2, respectively. In Fig. 4, parts like those in the first embodiment of the present invention are designated by like reference numerals and symbols, and operate alike.

In the event of urgency such as the output of trouble occurrence data from the monitoring control subject systems 3-1 and 3-2, the urgency notifier 41 sends out a trouble occurrence notification to the user terminals 5-1 and 5-2 even when the terminals 5-1 and 5-2 are not accessing the monitoring control agent system. The notification receivers 51-1 and 51-2 of the user terminals 5-1 and 5-2 receive the urgency notification from the urgency notifier 41.

The transmission of data between the urgency notifier 41 and each of the notification receivers 51-1 and 51-2 is executed by means of sending a message or an electronic mail to communication devices such as a pocket-bell and a portable telephone set or an electronic mail or by IM (instant message) for transferring a message via an internet.

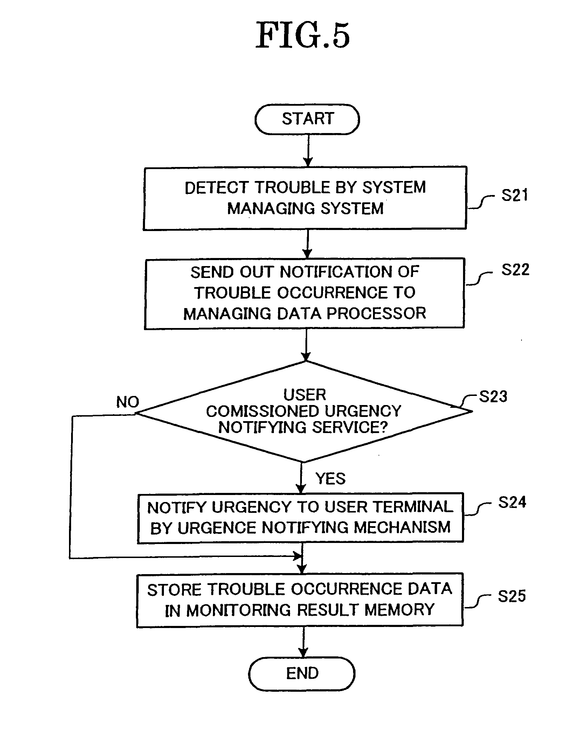

Fig. 5 is a flow chart showing a procedure of the urgency notification in the second embodiment of the network monitoring control system according to the present invention. The urgency notification procedure in the second embodiment of the network monitoring control system will now be described with reference to Figs. 4 and 5.

When trouble occurs in the system or the main signal network, the network system 31-1 of the monitoring control subject system 3-1, which the user terminal 5-1 has commissioned the monitoring control of, detects the trouble via the system accessing mechanism 32-1 (step S21 in Fig. 5).

The system managing system 33-1 sends out a notification of the trouble occurrence to the managing data processor 12 by the agency of M-EVENT-REPOORT service of CMIS (Common Management Information Service) or an event notification function such as an SNMP trap function (step S22 in Fig. 5).

The managing data processor 12 retrieves the commission content memory 1 for the data of the user who commissioned the monitoring control of the monitoring control subject system 3-1 relevant to the notified trouble data, and thus obtains data of the user terminal 5-1. When the user terminal 5-1 has commissioned the urgency notifying service as monitoring control business to the monitoring control agent system 1 (step S23 in Fig. 5), the managing data processor 12 sends out the urgency notification data to the customer gateway 16. When the user has not commissioned the urgency notification service as the monitoring control business, the managing data processor 12 does not send out any urgency notification to the user terminal 5-1.

The customer gateway 16 converts the urgency notification data to a form capable of being expressed in the notification receiver 51-1, and sends out the converted urgency notification data to the notification receiver 51-1 of the user terminal 5-1 (step S24 in Fig. 5). The managing data processor 12 stores the trouble occurrence notification data to the monitoring result memory 14 irrespective of the urgency notification to the user (step S25 in Fig. 5).

The above operation in this embodiment is also brought about in the case when the monitoring control agent system 1 sends out the urgency notification regarding the trouble data outputted from the monitoring control subject system 3-2 to the monitoring control subject system 3-2 commissioning the business of the monitoring control of the monitoring control subject system 3-2 to the monitoring control agent system 1.

As stated above, the second embodiment of the present invention has, in addition to the advantage obtainable with the first embodiment of the present invention, an advantage that it is possible to instantaneously transmit the data to the user terminals 5-1 and 5-2 which do not normally do monitoring in the event of occurrence of an urgency status such as a trouble in the monitoring control subject systems 3-1 and 3-2.

In addition, in the event to urgency status occurrence in either of the monitoring control subject systems 3-1 and 3-2, selection as to the notification or non-notification of the urgency to users not requiring any instantaneous data.

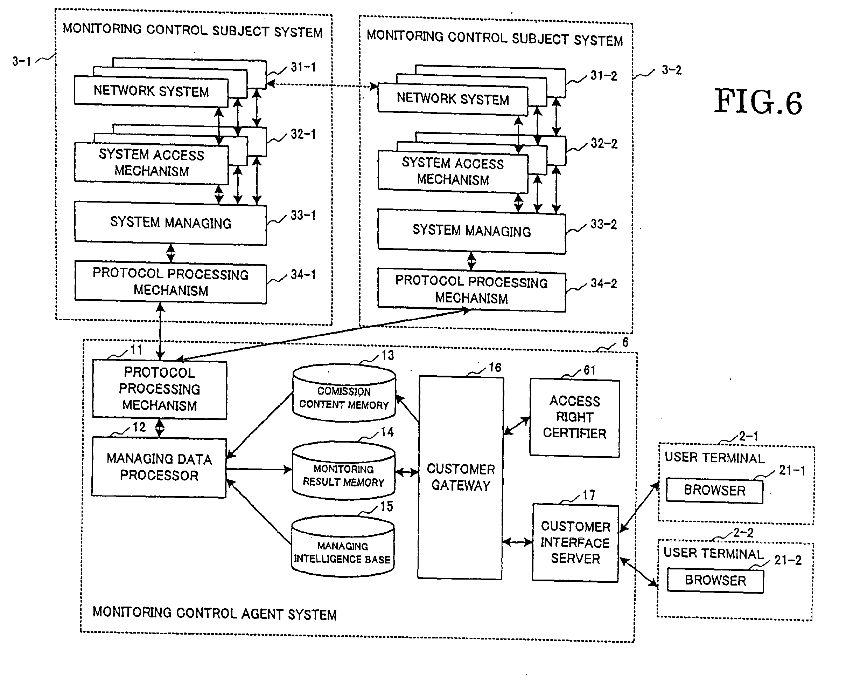

Fig. 6 is a block diagram showing the construction of a third embodiment of the network monitoring control system according to the present invention. Referring to Fig. 6, the third embodiment of the network monitoring control system is the same in construction as the first embodiment of the present invention except for that the monitoring control agent system 6 additionally includes an accessing right certifier 61. In Fig. 6, parts like those in the first embodiment of the present invention are designated by like reference numerals and symbols.

The access right certifier 61 shows operation items with respect to the data of monitoring the monitoring control subject systems 3-1 and 3-2 that can be executed by the user terminals 2-1 and 2-2. The accessing right certifier 61 holds accessible managing object instance and kinds of allowed accessing (such as setting of state and securing thereof) for each of the user terminals 2-1 and 2-2.

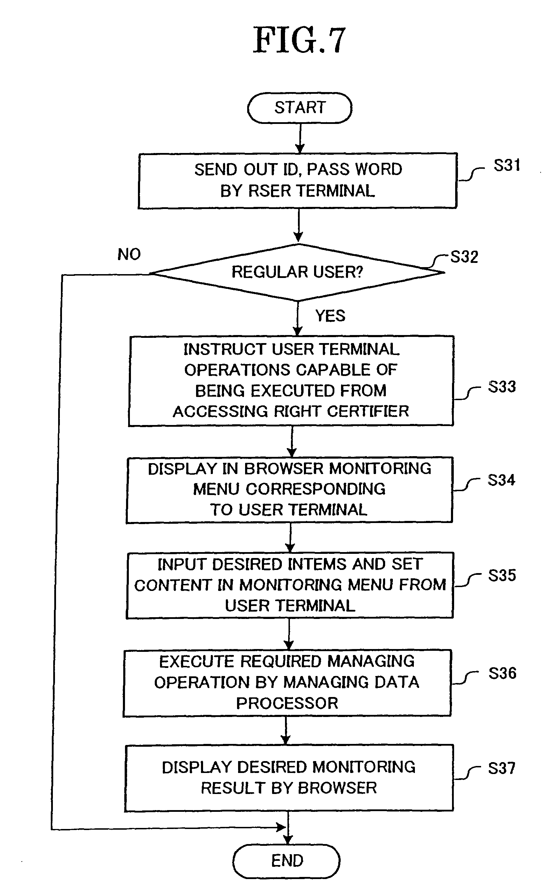

Fig. 7 is a flow chart showing a procedure of monitoring control operation executed in the user terminals 2-1 and 2-2 in Fig. 6. The monitoring control operation procedure in the user terminals 2-1 and 2-2 will now be described with reference to Figs. 6 and 7.

The user terminal 2-1 accesses the customer interface server 17 of the monitoring control agent system via the browser 21-1. At this time, the terminal 2-1 sends out the user ID guaranteeing the user to be a regular user and a corresponding password to the customer interface server 17 (step S31 in Fig. 7).

The customer interface server 17 sends out the data of the user ID and the password from the user terminal 2-1 to the customer gateway 16, and the customer gateway certifies the accessing (step S32 in Fig. 7).

When the certification has been succeeded, the customer gateway 16 receives, from the accessing right certifier 61, a list of managing object instances capable of being accessed and kinds of accessing such as possible state obtaining and state setting with respect to each managing object instance (step S33 in Fig. 7). The customer gateway 16 converts the received data to a form capable of being shown on the browser 21-1, then forms a monitoring menu capable of being read and operated in the user terminal 2-1, and sends out the menu thus formed via the customer interface server 17 to the browser 21-1 (step S34 in Fig. 7).

The user terminal 2-1 inputs, from the monitoring menu shown on the browser 21-1, setting contents including desired monitoring control items and, if necessary for operation, such data as values for presetting in the monitoring control subject system 3-1, and sends out these inputted data to the customer interface server 17 (step S35 in Fig. 7).

The customer interface server 17 sends out the data sent out from the user terminal 2-1 to the customer gateway 16. The customer gateway 16 converts the monitoring control operation desired by the user terminal 2-1 to such form as M-GET request or M-SET request of CMIS or GET request of SNMP capable of being recognized in the managing data processor 12, and requests the monitoring control operation to the managing data processor 12.

The managing data processor 12 executes the requested monitoring control operation with respect to the system managing system 33-1 of the monitoring control subject system 3-1. The managing system 33-1 send out the operation result to the managing data processor 12. The managing data processor 12 stores the result of the executed managing operation in the monitoring result memory 14, and notifies the result to the customer gateway 16 (step S36 in Fig. 7).

The customer gateway 16 converts the result of the notified monitoring control operation to a form capable of being shown on the browser 1-1, and sends out the converted result via the customer interface server 17 to the browser 21-1. The browser 21-1 shows the sent-out result of the monitoring control operation (step S37 in Fig. 7).

The above operation in this embodiment is also executed in the case where the user terminal 2-2, which commissions the monitoring control business concerning the monitoring control subject system 3-2 to the monitoring control agent system 1, makes monitoring control of the monitoring control subject system 3-2 via the monitoring control agent system 1.

As shown above, the third embodiment of the present invention has, in addition to the advantage of the first embodiment of the present invention, an advantage that the user having commissioned the monitoring control operation provides a mechanism for the monitoring control operation so that the user can make detailed monitoring control as desired.

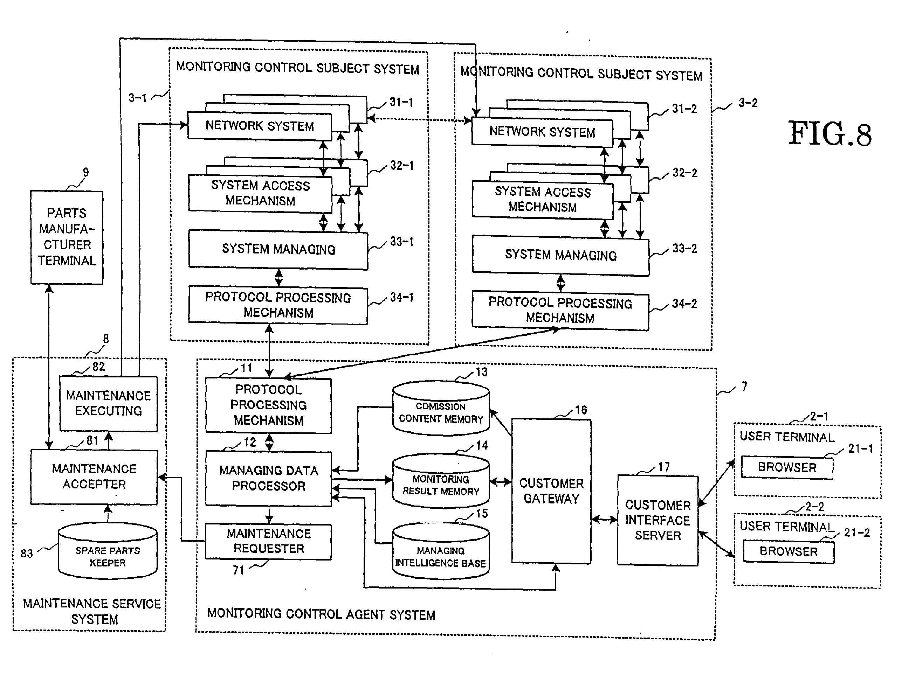

Fig. 8 is a block diagram showing the construction of a forth embodiment of the network monitoring control system according to the present invention. Referring to Fig. 8, the fourth embodiment of the network monitoring control system is the same as in construction as the first embodiment of the present invention except for that the monitoring control agent system 7 additionally includes a maintenance requester 71 and that it additionally comprises a maintenance service system 8 and a parts manufacturer terminal 9. In Fig. 8, parts like those in the first embodiment are designated by like reference numerals and symbols. The like parts operate in the same way as those in the first embodiment of the present invention.

The maintenance requester 71 requests the replacement and repair of the network systems 31-1 and 31-2 of the monitoring control subject systems 3-1 and 3-2 to the maintenance service system 8. The managing data processor 12 and the customer gateway 16 have functions of communicating with each other.

The maintenance service system 8 serves to execute the maintenance of the monitoring control subject systems 3-1 and 3-2. The maintenance service system 8 includes a maintenance acceptor 81 for dealing with maintenance data in the monitoring control agent system 81, a maintenance executing part 82 for executing the replacement and repair of parts in the network systems 31-1 and 31-2 in the monitoring control subject systems 3-1 and 3-2, and a spare parts keeper 83 for keeping spare parts possible for replacement. The parts manufacturer terminal 9 is a parts manufacturer's terminal system for manufacturing parts.

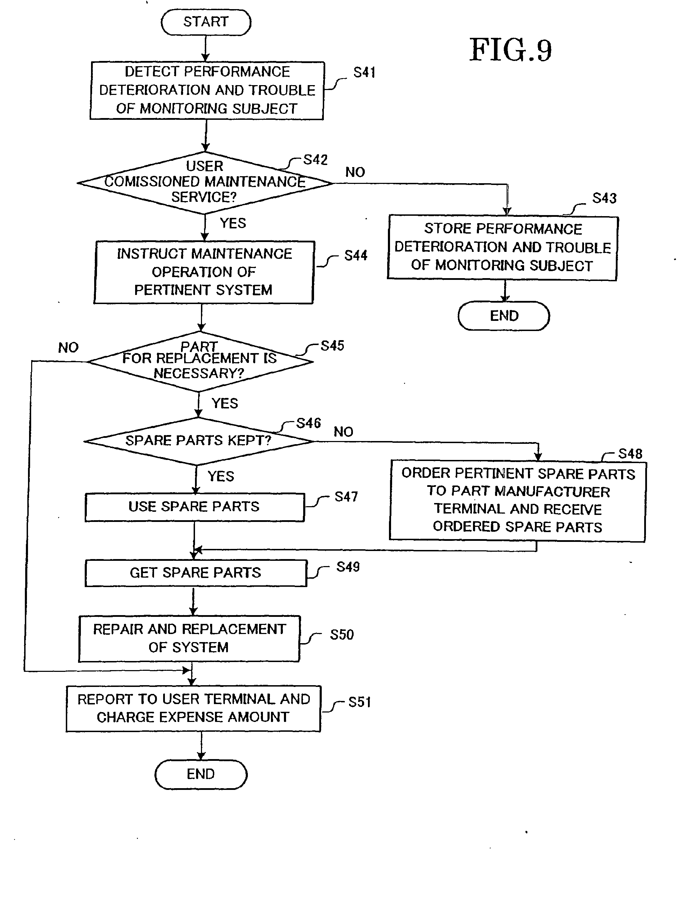

Fig. 9 is a flow chart showing a procedure of the replacement and repair of the network systems 3-1 and 3-2 in the fourth embodiment of the network monitoring control system. Referring to Figs. 8 and 9, the procedure of replacing and repairing the network systems 3-1 and 3-2 in the fourth embodiment of the network monitoring control system will now be described.

The managing data processor 12 executes the monitoring control of the monitoring subject system 3-1, and detects performance deterioration of or trouble in a component of the network system 31-1 from performance monitoring data and trouble data of the monitoring control subject system 3-1 (step S41 in Fig. 9).

The managing data processor 12 makes a check, from the kind of business commissioned by the user terminal 2-1, which is stored in the commission content memory 13, as to whether the user terminal 2-1 having commissioned by the monitoring control of the monitoring control agent system 3-1 has also commissioned the maintenance of the system to the monitoring control agent system 1 (step S42 in Fig. 9). When the user terminal 2-1 has not commissioned the maintenance business, data of the performance deterioration and trouble of the monitoring subject are stored in the monitoring result memory 14 (step S43 in Fig. 9).

When the user terminal 2-1 has commissions the maintenance business, the managing data processor 12 notifies the maintenance of the pertinent system in the network system 31-1 to the maintenance requester 71. The maintenance requester 71 notifies the maintenance of the instructed system to the maintenance acceptor (step S44 in Fig. 9).

When the maintenance acceptor 81 checks as to whether the spare part for the replacement of the pertinent operaion (step S45 in Fig. 9). When the spare part is required for the maintenance, the maintenance acceptor 81 retrieves the spare parts kept for replacement in the spare parts keeper 83 (step S46 in Fig. 9). When such spare parts are kept, they are used or replacement (step S47 in Fig. 9).

When no such spare part is kept in the spare parts keeper 83, the maintenance acceptor 81 orders the pertinent spare parts to the parts manufacturer terminal 9, and receives the ordered spare parts (step S48 in Fig. 9). When spare parts in the spare parts keeper 83 are used for maintenance, the maintenance accepter 81 gets pertinent spare parts from the parts manufacturer terminal 9 for the maintenance of the next time, and replenishes the spare parts keeper 83 with these spare parts (step S49 in Fig. 9).

The maintenance executing part 82 repairs the system by repairing or replacing a system part or system parts as the subject of maintenance (step S50 in Fig. 9). When the maintenance operation in the maintenance service system 8 is over, the maintenance acceptor 81 notifies maintenance end data including the expense required for the maintenance operation of this time, and the maintenance requester 71 notifies the data to the managing data processor 12.

The managing data processor 12 computes the amount of expense charged to the user. The managing data processor 12 notifies the end of the maintenance operation and the charged expense amount to the customer gateway 16. The customer gateway 16 converts the data to a form capable of being displayed on the browser 21-1, and sends out the converted data to the browser 21-1. The managing data processor 12 stores the maintenance result data in the monitoring result memory 14 (step S51 in Fig. 9).

The above operation of the embodiment is also executed in the case, in which the operation of maintenance of the network system 31-2 of the monitoring control subject system 3-2 is instructed to the maintenance service system, the maintenance service system 8 executes the operation of maintenance of the network system 31-2, and the monitoring control agent system 7 charges the expense to the user terminal 2-2.

As shown above, the fourth embodiment of the present invention has, in addition to the advantage of the first embodiment of the present invention, an advantage that the user side may not keep any spare part because of the user's commission of the maintenance service.

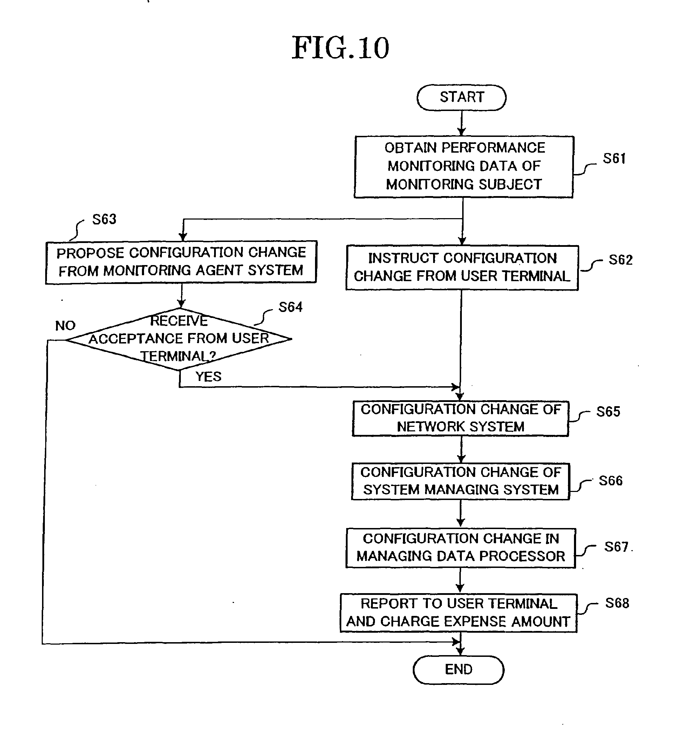

Fig. 10 is a flow chart showing a procedure of changing the configuration of the monitoring control subject systems 3-1 and 3-2 in a fifth embodiment of the network monitoring control system according to the present invention. The fifth embodiment of the network monitoring control system is the same in construction as the fourth embodiment of the network monitoring control system shown in Fig. 8 according to the present invention. Thus, the procedure of changing the configuration of the monitoring control subject systems 3-1 and 3-2 in the fifth embodiment of the network monitoring control system will be described with reference to Figs. 8 and 10.

Normally, the managing data processor 12 executes statistical processing by obtaining performance monitoring data of the managing data processor 12 such as communication error data and communication channel congestion factor, and accumulates the result data in the monitoring result memory 14 (step S61 in Fig. 10).

The user terminal 2-1 grasps the prevailing status of the monitoring control subject system 3-1 via the browser 21-1. When the user terminal 2-1 judges, from such data as the future demand estimation of the main signal network constituted by the network system 31-1, that reinforcement of equipment is necessary, it determines a configuration change. The user terminal 2-1 then sends out a configuration change request via the browser 21 to the customer interface server 17. The customer interface server 17 notifies the content of the configuration change request from he user terminal 2-1 to the customer gateway 16. The customer gateway 16 sends out the received content to the managing data processor 12 (step S62 in Fig. 10).

Aside from the configuration change request, the managing data processor 12 may show a proposal of a configuration change such as reinforcement of the monitoring control subject system 3-1 to the user terminal 2-1 by processing performance monitoring data. The showing of a configuration change proposal is executed in a system, in which the managing data processor 12 notifies the change proposal to the customer gateway 16, and the customer gateway 16 converts the proposal data to a form capable of being shown on the browser 21-1 and sends out the converted proposal data to the browser 21-1 (step S63 in Fig. 10).

When the configuration change proposal shown by the managing data processor 12 is appropriate, the user terminal 2-1 provides a configuration change request on the browser 21-1. When the shown configuration change proposal is inappropriate, the user terminal 2-1 provides a configuration change rejection notification on the browser 21-1.

When the user terminal 2-1 provides the configuration change rejection notification, the configuration change of the monitoring control subject system 3-1 by the monitoring control agent system 1 is suspended (step S64 in Fig. 10).

When the managing data processor 12 receives a system configuration change request from the user terminal 2-1, it sends out an instruction of the configuration change of the network system 31-1 necessary for the consrtruction change to the maintenance requester 71. The maintenance requester 71 transfers the configuration change instruction to the maintenance acceptor 81.

When new parts are necessary for the system configuration change, the maintenance acceptor 81 obtains these parts for the replacement. When such spare parts for replacement are not kept in the spare parts keeper 83, the maintenance acceptor 81 obtains the parts via the parts manufacturer terminal 9. When the spare parts are kept in the spare parts keeper 43, the maintenance acceptor 81 obtains these kept spare parts.

The maintenance acceptor 81 sends out a request of the operation of configuration change of the monitoring control subject system 3-1. The maintenance executing part 82 changes the configuration of the monitoring control subject system 3-1 by executing such operation as setting change and parts installation of the network system 31-1 of the monitoring control subject system 3-1.

When the configuration change is ended, the maintenance acceptor 81 notifies maintenance end data including the expense occurred this time to the maintenance requester 71, and the maintenance requester 71 notifies the data to the managing data processor 12 (step S65 in Fig. 10).

When the setting change of the network system 31-1 is ended, the managing data processor 12 sends out a configuration change instruction to the system managing system 33-1. The configuration change is executed by generation instructions and deletion instructions to managing object instances in the system managing system 33-1 (step S66 in Fig. 10).

Then, the managing data processor 12 changes the configuration of itself. The configuration change is executed by generation instructions and deletion instructions to managing object instances in the managing data processor 12 (step S67 in Fig. 10).

When the configuration change operation is ended, the managing data processor 12 computes the expense amount charged to the user terminal 2-1 on the basis of the expense notified from the maintenance acceptor 81, and sends out a configuration change end notification and charged expense amount data to the customer gateway 16. The customer gateway 16 converts these data to a form capable of being displayed on the browser 21, and sends out the converted data to the browser 21 (step S68 in Fig. 10).

The above operation of the embodiment is also executed in the case, where the monitoring control agent system 1 changes the configuration of the monitoring control subject system 3-2, the maintenance service system executes the operation of maintenance of the network system 8, and the monitoring control agent system 1 charges the expense to the user terminal 2-2.

As shown above, the fifth embodiment of the present invention has, in addition to the advantage of the first embodiment, an advantage that the user can commission system configuration changes to the monitoring control agent system 1. In addition, since the monitoring control agent system 1 proposes system configuration changes on the basis of the performance monitoring data of the monitoring control subject, it is possible to maintain the stable state of the monitoring control subject system 3-1.

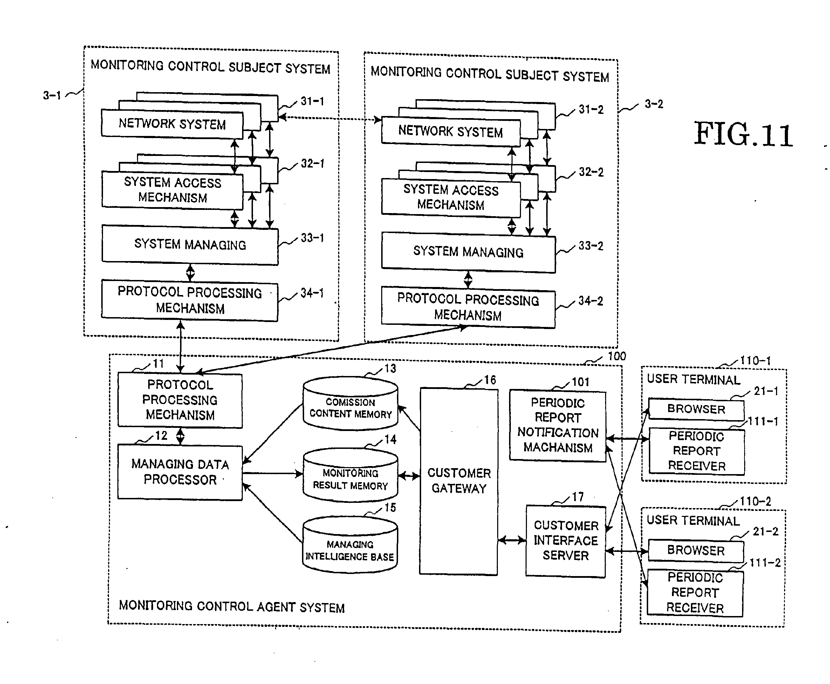

Fig. 11 is a block diagram showing the construction of a sixth embodiment of the network monitoring control system according to the present invention. Referring to Fig. 1, the sixth embodiment of the network monitoring control system is the same in construction as the first embodiment of the present invention shown in Fig. 1 except for that the monitoring control agent system 100 additionally includes a periodic report notifying mechanism 101 and that the user terminals 110-1 and 110-2 include periodic report receivers 111-1 and 111-2, respectively. In Fig. 11, parts like those in the first embodiment are designated by like reference numerals and symbols.

The periodic report notifying mechanism 101 sends out a report of the result of periodically commissioned monitoring of the monitoring subject to the user terminals 110-1 and 110-2. The periodic report receivers 111-1 and 111-2 receive the periodic report from the period report notifying mechanism 101. The transfer of data between the periodic report notifying mechanims 101 and each of the periodic report receivers 111-1 and 111-2, is executed by such means as electronic mail, FAX and report mailing.

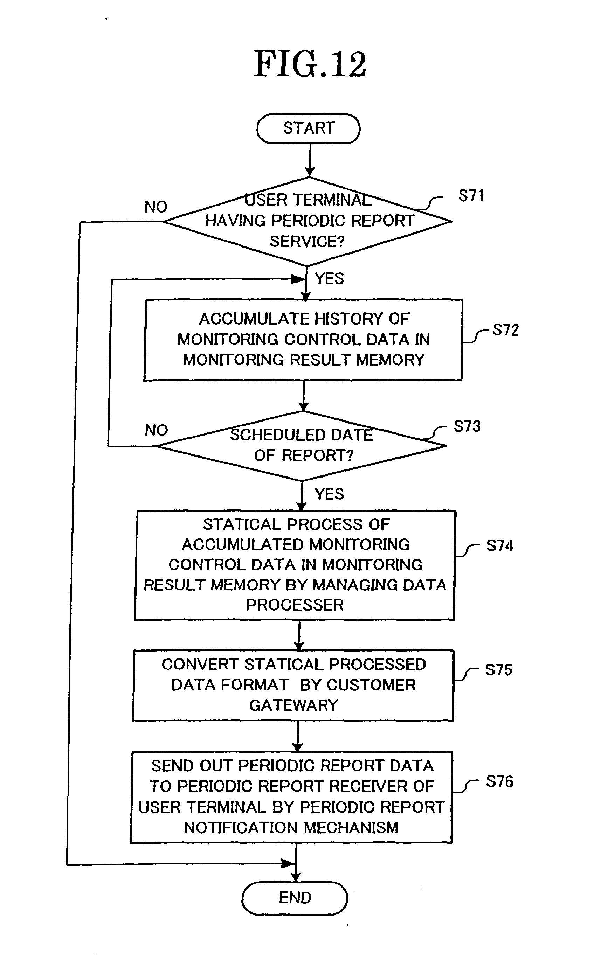

Fig. 12 is a flow chart showing a procedure of sending out a periodic report in the sixth embodiment of the network monitoring control system according to the present invention. The periodic report sending procedure in the sixth embodiment of the network monitoring control system will now be described with reference to Figs. 11 and 12.

The monitoring control agent system 100 selects the user terminal 110-1 which has a periodic report service contract (step S71 in Fig. 12). Concerning the monitoring control data (such as trouble occurrence data and performance monitoring data) of the monitoring control subject system 3-1, which the contracted user terminal 110-1 has commissioned the monitoring control for, the monitoring data processor 12 accumulates the history of the monitoring control data in the monitoring result memory 14 (step S72 in Fig. 12). The above processing is not executed in the case of users without periodic report service contract).

When the scheduled date of making the periodic report to the user terminal 110-1 is reached (step S73 in Fig. 12), the managing data processor 12 obtains the monitoring control data stored in the monitoring result memory 14, then executes statistical processing concerning the managing status of the monitoring control subject such as the number of trouble occurrence cases and the line band utilization factor, and then stores the result of the processing in the monitoring result memory 14 (step S74 in Fig. 12). The managing data processor 12 then instruct the customer gateway 16 to notify the processing result to the user terminal 10-1.

The customer gateway 16 obtains the statistical processing result data stored in the monitoring result memory 14, and the periodical report receiver 111-1 of the user terminal 110-1 converts the obtained data to a form capable of being shown (step S75 in Fig. 12), and sends out the converted data via the periodic report notifying mechanism 101 to the periodic report receiver 111-1 of the user terminal 110-1 (step S76 in Fig. 12).

The above operation of the embodiment is also executed in the case, in which the monitoring control agent system sends a periodic report concerning the monitoring control subject system 3-2 to the user terminal 2-2.

As has been shown, the sixth embodiment of the present invention has, in addition to the advantage of the first embodiment of the present invention, an advantage that the user can obtain periodic managing data of the monitoring control subject systems 3-1 and 3-2, which the user has commissioned the monitoring control of, thus obtaining a summary of the managing status.

As has been described in the foregoing, in the network monitoring control system according to the present invention, in compliance with commission data from a plurality of network user terminals each constituted by a network system and a network monitoring system, the network monitoring systems do collection of the corresponding network status for the user terminals. Thus, the user for doing the monitoring control can reduce the monitoring control expense without need of any advanced monitoring intelligence.

In addition, in the network monitoring control system having the above construction according to the present invention, the maintenance service system can do maintenance operation concerning the network according to commission data from each user terminal. It is thus possible to obtain repair of parts in trouble or the like without need of keeping any spare part.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

Each feature disclosed in this specification (which term includes the claims) and/or shown in the drawings may be incorporated in the invention independently of other disclosed and/or illustrated features.

The text of the abstract is repeated here as part of the specification.

User terminals each notify a monitoring control agent system via a browser of monitoring control business commission data. The monitoring control agent system receives by a customer interface server the commission data notified from the user terminals, analyzes the commission data notified from a customer gateway, and stores in a commission content memory the analyzed data as business data for execution in the monitoring control agent system. A managing data processor manages business steps such as processing of data and sending of control data to the network system on the basis of the kind of business data stored in the commission content memory, and stores the processing result in a monitoring result memory. The user terminals display the data from the monitoring result memory using the browsers.

This application claims benefit of Japanese Patent Application No. 2000-304296 filed on 4 October 2000, the contents of which are incorporated by reference.

## Claims

1. A network monitoring control system comprising a managing data processor means, which is configured to collect, for a plurality of network user terminals each constituted by a network system and a network monitoring system, the status of one of the network systems based on commission data from the corresponding user terminal.

2. The network monitoring control system according to claim 1, further comprising a customer gateway means for converting the data of the network status to a form capable of being shown with browser software operable in the user terminal.

3. The network monitoring control system according to claim 1 or 2, further comprising a managing intelligence base for storing a monitoring control procedure with respect to the network monitoring systems, and for executing based on the commission data the monitoring control of the network on the basis of the monitoring control procedure in the managing intelligence base.

4. The network monitoring control system according to claim 1 or 2, further comprising an urgency-notifying mechanism for sending out, at least as urgency data to the user terminal, trouble-occurrence data detected from the network status data collected by the managing data processing means.

5. The network monitoring control system according to claim 1, further comprising a maintenance service system for executing a commissioned maintenance operation with respect to the network on the basis of the commission data from the user terminal.

6. The network monitoring control system according to claim 5, wherein the maintenance service system is configured to collectively manage spare parts and, upon detecting trouble in the network or performance deterioration thereof, to replace a corresponding network part with a spare part.

7. The network monitoring control system according to claim 1, 2 or 5, wherein each user terminal is configured to exchange at least the commission data and network status data via the browser software.

8. The network monitoring control system according to claim 1, 2 or 5, wherein the system is configured to produce a configuration change proposal for the network on the basis of the network performance monitoring data, and to send out the proposal to the user network.

9. The network monitoring control system according to claim 1, 2 or 5, further comprising an access-right certifier means for deciding, from identification data from the user terminal, one of the monitoring control operations capable of being executed for the network from the user terminal, and for notifying that decided monitoring control operation.

10. The network monitoring control system according to claim 1, 2 or 5, wherein the system is configured to provide the monitoring control service independently to each of the plurality of the network systems on the basis of the commission data from the user terminals.

11. The network monitoring control system according to claim 1, 2 or 5, further comprising a means for periodically notifying the user terminals of at least the network status.

12. A network monitoring control method comprising a step for collecting, for a plurality of network user terminals each constituted by a network system and a network monitoring system, status data of one of the network systems based on commission data from the corresponding user terminal.

13. The network monitoring control method according to claim 12, further comprising a step for converting the network status data to a form capable of being shown with browser software operable in the user terminal.

14. The network monitoring control method according to claim 12 or 13, further comprising a step for storing a monitoring control procedure with respect to the network monitoring systems, and a step for executing based on the commission data the monitoring control of the network on the basis of the monitoring control procedure in the managing intelligence base.

15. The network monitoring control method according to claim 12 or 13, further comprising a step of sending out, at least as urgency data to each user terminal, trouble-occurrence data detected from the network status data collected in the network status data collection step.

16. The network monitoring control method according to claim 12, further comprising a step for executing, on the basis of the commission data for each user terminal, a maintenance operation with respect to the network.

17. The network monitoring control method according to claim 16, wherein a maintenance service system collectively manages spare parts and, upon detecting trouble in the network or performance deterioration thereof, replaces a corresponding network part with the spare part.

18. The network monitoring control method according to claim 12, 13 or 16, wherein the user terminals exchange their commission data and the network status data via the browsers.

19. The network monitoring control method according to claim 12, 13 or 16, wherein a configuration-change proposal of a network system is produced on the basis of the performance monitoring data of the network system, and is sent out to the corresponding user terminal.

20. The network monitoring control method according to claim 12, 13 or 16, further comprising a step of deciding with respect to the network, on the basis of network performance monitoring data, which monitoring control operation to implement from the user terminal, and a step of notifying the user terminal of the decided monitoring control operation.

21. The network monitoring control method according to claim 12, 13 or 16, wherein the monitoring control service is provided independently to the plurality of network systems on the basis of the commission data from the user terminals.

22. The network monitoring control method according to claims 12, 13 or 16, further comprising a step of periodically notifying the user terminals of at least the network status.
